## Europäisches Patentamt
## European Patent Office
## Office européen des brevets

(19)

(11) Veröffentlichungsnummer: **0 071 849**

**B1**

(12)

# EUROPÄISCHE PATENTSCHRIFT

(45) Veröffentlichungstag der Patentschrift: 29.04.87

(51) Int. Cl.⁴: **C 08 K 9/08, C 08 K 5/25**

(21) Anmeldenummer: 82106689.1

(22) Anmeldetag: 23.07.82

(54) Verfahren zur Stabilisierung von organischen Polymeren gegen oxidativen Abbau.

(30) Priorität: 06.08.81 DE 3131221

(43) Veröffentlichungstag der Anmeldung: 16.02.83 Patentblatt 83/7

(45) Bekanntmachung des Hinweises auf die Patenterteilung: 29.04.87 Patentblatt 87/18

(84) Benannte Vertragsstaaten: AT BE CH DE FR GB IT LI NL SE

(56) Entgegenhaltungen:
EP-A-0 025 505
GB-A-2 003 890
US-A-3 993 622

(73) Patentinhaber: Siemens Aktiengesellschaft Berlin und München, Wittelsbacherplatz 2, D-8000 München 2 (DE)

(72) Erfinder: Gentzkow, Wolfgang, Dr. v., Zwetschgenweg 1, D-8524 Kleinsendelbach (DE)
Erfinder: Schmiedel, Manfred, Dipl.- Ing., Volkacher Strasse 26, D-8500 Nürnberg-Grossgründlach (DE)

EP 0 071 849 B1

## Beschreibung

Die Erfindung betrifft ein Verfahren zur Stabilisierung organischer Polymerer gegen kupferkatalysierten oxidativen Abbau mittels N.N'-Eis-salicyloyl-hydrazin als Metalldesaktivator.

Viele organische Materialien, insbesondere Polymere, wie Polyolefine, Polyoxymethylen, Polyamid und ungesättigte Polyesterharze, die heutzutage in der Elektrotechnik für Isolationszwecke verwendet werden, unterliegen in Gegenwart von Kupfer einer beschleunigten thermooxidativen Alterung. Dadurch verschlechtern sich aber die elektrischen und mechanischen Dauergebrauchseigenschaften beträchtlich. Besonders gravierend wird der schädigende Einfluß des Kupfers bei erhöhten Temperaturen, da die Alterungsgeschwindigkeit der Polymeren mit steigenden Temperaturen stark zunimmt.

Insbesondere vernetzte Polyolefine, die in zunehmendem Umfang als Isoliermaterial für Kabel und Leitungen eingesetzt werden, unterliegen in Gegenwart von Kupfer einer stark beschleunigten Alterung und müssen deshalb wirksam gegen den oxidationsbeschleunigenden Einfluß des Kupfers geschützt werden. Dies kann erfahrungsgemäß durch Einbringen einer Folie als Trennschicht zwischen Kupferleiter und Isolierung geschehen oder durch Verwendung verzinnter Leiter; dadurch wird der direkte Kupferkontakt der Isolierung vermieden. Derartige Maßnahmen sind jedoch teuer und fertigungstechnisch sehr aufwendig. So sind beispielsweise beim Einsatz einer Folie als Trennschicht, insbesondere bei kleinen Leiterquerschnitten, nur geringe Fertigungsgeschwindigkeiten möglich.

Ein weiterer, verfahrenstechnisch einfacher Weg zur Erzielung der gewünschten Anforderungen an die Qualität und die Temperaturbelastbarkeit von Polymerwerkstoffen in Kontakt mit Kupfer beinhaltet die Verwendung sogenannter Kupferdesaktivatoren, die die oxidationsbeschleunigende Wirkung von Kupfer auch bei erhöhten Temperaturen inhibieren. Die Stabilisierung von Polymermaterialien durch Kupferdesaktivatoren ist somit eine kostengünstige Maßnahme.

Aus der DE-OS 21 30 131 ist es bekannt, Kupferdesaktivatoren auf der Basis von N.N'-Bis-salicyloyl-hydrazin zu verwenden. Dabei sollen sich insbesondere mehrfach alkyl- oder alkoxysubstituierte Derivate des Grundkörpers für die Stabilisierung von Polyolefinen gegen die schädigende Wirkung von Kupfer und anderen Übergangsmetallen als wirksam erwiesen haben.

Aus der DE-PS 27 03 338 ist es bekannt, daß zur dauerhaften Stabilisierung von mit Kupfer in Berührung stehenden Polymeren eine Kombination aus N.N'-Eis-salicyloyl-hydrazin als Metalldesaktivator und oligomerem 2.2.4-Trimethyl-1.2-dihydrochinolin als Oxidationsinhibitor technisch vorteilhaft ist. Diese Stabilisatorkombination hat sich auch für die Stabilisierung vernetzter Polyolefine als besonders wirksam erwiesen. Die gute Wirksamkeit von N.N'-Bis-salicyloyl-hydrazin als Metalldesaktivator wurde dabei aufgrund umfangreicher Untersuchungen an Modelladern und anhand von Alterungsversuchen an technischen Produkten ermittelt.

Die Einarbeitung eines Metalldesaktivators der genannten Art, sowie von weiteren Additiven, in einen Polymerwerkstoff, wie beispielsweise in ein Polyolefin für Kabel- und Leitungsisolierungen, erfolgt im technischen Maßstab durch übliche Mischverfahren. In der Kabel- und Leitungstechnik werden dabei bevorzugt zunächst sogenannte Konzentrate, bestehend aus Metalldesaktivator bzw. anderen Additiven und Polymermaterial, hergestellt, die dann durch Einmischen in weiteres Polymermaterial zu Isoliermischungen mit den gewünschten Konzentrationen an Metalldesaktivator und den weiteren Additiven verarbeitet werden. Bei der Herstellung der Konzentrate mit dem Metalldesaktivator N.N'-Bis-salicyloyl-hydrazin im technischen Maßstab hat sich nun gezeigt, daß bei den damit befaßten Personen Augenreizungen bzw. Augenschädigungen auftreten.

Um die Ursache der Augenreizungen bzw. Augenschädigungen zu ermitteln, wurden Versuche mit Kaninchen durchgeführt. Da davon ausgegangen werden muß, daß der Metalldesaktivator bei der technischen Verarbeitung in fester Form, beispielsweise als Staub, in das Auge gelangen kann, wurde bei den Versuchen die feste Substanz in relativ kurzen Zeitabständen, d.h. täglich, mehrfach direkt in das Auge der Versuchstiere eingebracht und dabei wurden die Veränderungen am Auge über einen längeren Zeitraum hinweg beobachtet. Als Ergebnis dieser Versuche wurde festgestellt, daß die Augenreizungen und Augenschädigungen auf das N.N'-Bis-salicyloyl-hydrazin selbst oder auf geringe Mengen an herstellungsbedingten Verunreinigungen zurückzuführen sind.

Gemäß den deutschen Offenlegungsschriften 29 33 870 und 30 33 383 treten Augenreizungen bzw. Augenschädigungen nurmehr in stark verminderter Form auf, wenn ein N.N'-Bis-salicyloyl-hydrazin zum Einsatz gelangt, das durch Umsetzung von Salicylsäurealkylester mit Hydrazin bzw. Salicylsäurehydrazid gewonnen wird. Keines der dabei erhaltenen Produkte ist jedoch physiologisch völlig unbedenklich.

Aufgabe der Erfindung ist es, ein möglichst einfaches, kostengünstiges, generell anwendbares und sicher handhabbares Verfahren zur Stabilisierung organischer Polymerer mittels N.N'-Bis-salicyloyl-hydrazin als Metalldesaktivator anzugeben, bei welchem eine Staubbildung des Metalldesaktivators mit Sicherheit ausgeschlossen werden kann und negative Eigenschaftsveränderungen der stabilisierten organischen Polymeren vermieden werden.

Dies wird erfindungsgemäß dadurch erreicht, daß in das Polymere eine Paste eingearbeitet wird, die feinkristallines N.N'-Bis-salicyloyl-hydrazin in feiner Verteilung in einem flüssigen bis wachsartigen aliphatischen Kohlenwasserstoff geringer Flüchtigkeit enthält.

Überraschenderweise hat sich gezeigt, daß beim erfindungsgemäßen Verfahren der Metalldesaktivator wesentlich einfacher in die Polymeren, wie Polyolefine, eingearbeitet und darin homogen verteilt werden kann, als dies bei einem pulverförmigen Material der Fall ist. Darüber hinaus werden durch die Paste bzw. durch die Kohlenwasserstoffe auch die Vernetzung von Polyolefinen sowie die technisch erforderlichen Eigenschaften von Polyolefinen und vernetzten Polyolefinen nicht beeinträchtigt. Ein weiteres wesentliches Merkmal des erfindungsgemäßen Verfahrens besteht darin, daß sich bei der Verwendung der Paste auf der Oberfläche der Polymeren geringere Konzentrationen an Metalldesaktivator ergeben. Dies wiederum bringt den Vorteil eines verringerten Abriebs von staubförmigem N.N'-Bis-salicyloyl-hydrazin, das Augenreizungen bewirken könnte.

Bei der beim erfindungsgemäßen Verfahren eingesetzten Paste handelt es sich praktisch um ein disperses System (Dispersion). Hier ist nämlich das N.N'-Bis-salicyloyl-hydrazin als disperse Phase in einem Dispersionsmittel, dem Kohlenwasserstoff, fein verteilt. Unter einer "feinen Verteilung" wird dabei die Tatsache verstanden, daß der Metalldesaktivator in der Paste in agglomeratfreier Form vorliegt.

Die Paste enthält das N.N'-Bis-salicyloyl-hydrazin, das im folgenden kurz auch als BSH bezeichnet wird, in feinkristalliner Form. Zur Herstellung der Paste kann vorteilhaft in der Weise vorgegangen werden, daß das bei der Herstellung des Metalldesaktivators erhaltene grobkristalline Material mit dem Dispersionsmittel vermischt und die Mischung anschließend gemahlen wird, beispielsweise in einer Kugelmühle oder in einer Korundscheibenmühle. Besonders feindisperse Pasten werden dann erhalten, wenn der Mahlvorgang bei erhöhten Temperaturen (etwa bis 100°C) erfolgt. Die Paste kann aber auch durch intensives Mischen von feinkristallinem BSH mit dem Dispersionsmittel hergestellt werden, beispielsweise mittels eines Rührwerkes. Auch hierbei kann bei erhöhter Temperatur gearbeitet werden, wobei sich die Temperatur im allgemeinen nach der Viskosität des Dispersionsmittels richtet. Feinkristallines BSH wird im übrigen insbesondere durch Umfällen des bei der Synthese anfallenden Materials erhalten, beispielsweise durch Lösen in Natronlauge und Ausfällen mit Salzsäure.

Die Herstellung der beim erfindungsgemäßen Verfahren eingesetzten Paste erfolgt vorzugsweise unmittelbar nach der Synthese des N.N'-Bis-salicyloyl-hydrazins. Dabei ist es zweckmäßig, das frisch synthetisierte BSH in dem Gefäß, d.h. beispielsweise in dem Rührkessel zu trocknen, in dem nachfolgend die Pastenherstellung erfolgt. Es kann aber auch in der Weise verfahren werden, daß das von einer vorangegangenen Behandlunginfolge von anhaftender Flüssigkeit, wie Alkohol - noch feuchte Produkt unmittelbar zu einer Paste verarbeitet wird und sich erst daran eine Art Trocken- und Reinigungsprozeß anschließt, wobei - durch Rühren der Paste im Vakuum bei Temperaturen bis zu 100°C oder mit Hilfe einer Entgasungskaskade - der Alkohol und Reste an flüchtigen Ausgangssubstanzen und Nebenprodukten der Synthese entfernt werden. Bei einem derartigen Vorgehen ist gewährleistet, daß von der Synthese des Metalldesaktivators über die nachfolgende Herstellung und Aufbewahrung der Paste (sowie gegebenenfalls deren Versand) bis hin zur Einarbeitung der Paste in die zu stabilisierenden Materialien eine Gefährdung von Personen durch staubförmiges N.N'-Bis-salicyloyl-hydrazin mit Sicherheit ausgeschlossen ist.

Beim Einarbeiten der Paste in die polymeren Materialien, wobei diese bei der Verarbeitungstemperatur in flüssiger oder plastischer Form vorliegen, wird die Paste vorteilhaft aus den Lager- bzw. Versandgefäßen, wie Fässern, durch Pump- und Dosiereinrichtungen direkt in die zur Mischungsherstellung dienenden Vorrichtungen dosiert, beispielsweise in die für Kabel- und Leitungsisoliermischungen auf Polyolefinbasis gebräuchlichen Kneter oder Mischeinrichtungen oder direkt in den Extruder. Dabei zeigte es sich, daß die Paste mit abnehmender Kristallgröße des Metalldesaktivators und mit zunehmendem Dispersionsgrad einfacher gefördert und dosiert und in den Polymeren besser verteilt werden kann. Die leichte Einarbeitbarkeit der BSH-Paste in die Polymeren sichert dabei eine ausreichende Mischungshomogenität. Darüber hinaus ergibt sich aus der schnellen und homogenen Verteilbarkeit der feindispersen Paste insbesondere der Vorteil einer möglichen Direktdosierung der Paste bei der Verarbeitung und Formgebung von polymeren Werkstoffen und damit des sicheren Ausschlusses von Staubbildung und von Hautkontakt der mit der Verarbeitung befaßten Personen mit BSH.

Beim erfindungsgemäßen Verfahren wird vorteilhaft eine Paste verwendet, die N.N'-Bis-salicyloyl-hydrazin und den aliphatischen Kohlenwasserstoff, d.h. das Dispersionsmittel, im Verhältnis etwa von 1:2 bis 2:1 enthält. Vorzugsweise beträgt das Verhältnis von BSH und Dispersionsmittel etwa 1:1.

Das Dispersionsmittel ist, wie bereits ausgeführt, ein flüssiger bis wachsartiger aliphatischer Kohlenwasserstoff geringer Flüchtigkeit; dabei können auch Kohlenwasserstoffgemische vorliegen. Unter einem "aliphatischen" Kohlenwasserstoff wird in diesem Zusammenhang ein Kohlenwasserstoff verstanden, der einen überwiegend aliphatischen Charakter aufweist. Dies bedeutet, daß der Kohlenwasserstoff auch aromatische Reste enthalten kann bzw. daß in einem Kohlenwasserstoffgemisch auch aromatische Bestandteile enthalten sein können. Mit dem Begriff "geringe Flüchtigkeit" soll zum Ausdruck gebracht werden, daß der Kohlenwasserstoff auch bei höheren Temperaturen, d.h. insbesondere bei Temperaturen von etwa 250 bis 300°C, noch nicht merklich flüchtig ist.

Als Dispersionsmittel für die BSH-Paste werden vorteilhaft niedermolekulare Polyolefine, vorzugsweise (niedermolekulare) Polyisobutene, oder (flüssige bis vaselinartige) Paraffine und Paraffingemische verwendet. Daneben kann eine Reihe weiterer Verbindungen eingesetzt werden, wie Extenderöle, Petrolate, Kabelfüllmassen, Mineralöle, synthetische Öle und Wachse. Besonders vorteilhaft werden viskose (Viskosität bei 20°C > 5000 cP), d.h. zähflüssige Dispersionsmittel eingesetzt, weil damit äußerst stabile Pasten erhalten werden.

Durch die Verwendung von pastenförmigem N.N'-Bis-salicyloyl-hydrazin wird beim erfindungsgemäßen Verfahren eine Staubbildung vermieden und somit wird das Eindringen von staubförmigem BSH in das Auge ausgeschlossen. Die Zahl der theoretisch möglichen Dispersionsmittel zur Herstellung dieser Paste ist sehr

3

groß. So könnten - neben den obengenannten Verbindungenunter anderem auch folgende Substanzklassen in Frage kommen: Phosphorsäureester, Fettsäureester, Glycolsäureester, Polyester, halogenierte Kohlenwasserstoffe, Sulfonsäureester, Sulfamide, Alkohole, Ether, Ketone, Polykondensate und Siliconöle.

Die Schwierigkeit bei der Auswahl eines geeigneten Dispersionsmittels bestand nun in der Vielzahl der Anforderungen an eine derartige Flüssigkeit. Das Dispersionsmittel darf nämlich die Einsatzmöglichkeiten des Metalldesaktivators N.N'-Bis-salicyloyl-hydrazin für die organischen Polymeren, wie vernetzte und unvernetzte Polyolefine, nicht einschränken. Ferner dürfen die für den technischen Einsatz, beispielsweise von Polyolefinen als Kabel- und Leitungsisolierungen oder für Warmwasserrohre, erforderlichen Eigenschaften nicht beeinträchtigt werden. Darüber hinaus darf die Einarbeitbarkeit des Metalldesaktivators und dessen homogene Verteilung in den zu stabilisierenden Materialien nicht behindert und die Kosten der Fertigung technischer Produkte aus diesen Materialien dürfen nicht erhöht werden. Insbesondere beim Einsatz eines pastenförmigen Metalldesaktivators zur Stabilisierung von Kabel- und Leitungsisolierungen ist auch zu berücksichtigen, daß die Gefahr besteht, daß das Dispersionsmittel das Einarbeiten des Metalldesaktivators durch Schmierwirkung erschwert oder aus den gefertigten Isolierschichten ausschwitzt und Störungen an Kontakten und Verbindungsstellen hervorruft. Schließlich muß auch noch gewährleistet sein, daß durch das Dispersionsmittel die radikalische Vernetzung von Polyolefinen, die insbesondere bei Kabel- und Leitungsisolierungen für den Niederspannungsbereich im zunehmenden Maße durchgeführt wird, nicht beeinträchtigt wird. Diese Anforderungen werden von den vorstehend genannten Substanzklassen aber nicht in ausreichendem Maße erfüllt.

Mittels des erfindungsgemäßen Verfahrens, bei dem der Metalldesaktivator pastenförmig in das polymere Material eingearbeitet wird, können vernetzte und unvernetzte Thermoplaste, wie vernetzte und unvernetzte Polyolefine, und Elastomere sowie Reaktionsharze in gehärtetem und ungehärtetem Zustand vorteilhaft gegen schädliche katalytische Einflüsse von Kupfer geschützt werden; die Polymeren können dabei mit Kupfer in Berührung stehen oder Kupfer bzw. Kupferionen enthalten. Polymere mit dem erfindungsgemäß eingearbeiteten Metalldesaktivator können besonders vorteilhaft als Kabel- und Leitungsisolierungen in der Starkstromtechnik und Nachrichtentechnik oder zur Herstellung von Rohren, Rohrverbindungen oder Auskleidungen für Rohre, insbesondere in Verbindung mit Kupferrohren, eingesetzt werden. Darüber hinaus kann das erfindungsgemäße Verfahren auch zur Stabilisierung von Polymerwerkstoffen, von Isolierölen und von Schmierfetten, die mit Kupfer in Kontakt stehen oder Kupferionen enthalten, Verwendung finden. Derartige Isolieröle und Schmierfette gelangen insbesondere in der Elektrotechnik zum Einsatz.

Beim Einsatz von N.N'-Bis-salicyloyl-hydrazin in Kombination mit Oxidationsinhibitoren oder anderen Additiven in Polymeren können die Oxidationsinhibitoren und anderen Additive entweder nach dem üblichen Verfahren über die Herstellung von Polymerkonzentraten (Batch) verarbeitet werden oder sie können zusammen mit dem N.N'-Bis-salicyloyl-hydrazin zu einer Paste verarbeitet und den Polymeren in dieser Form zugemischt werden.

Anhand von Ausführungsbeispielen, die insbesondere die technische Eignung des erfindungsgemäßen Verfahrens für peroxidisch und strahlungsvernetzte Polyolefine zeigen, soll die Erfindung noch näher erläutert werden.

## Beispiel 1

### a) Mischungsherstellung

Die in Tabelle 1 angegebene Menge Hochdruckpolyethylen PE (d = 0,918 g/cm$^3$, MFI$_{190/2}$ = 0,2) wird in einem Kneter bei einer Temperatur von 140°C plastifiziert. Nach Zugabe der in Tabelle 1 aufgeführten Additive (BSH bzw. BSH-Paste sowie gegebenenfalls Stabilisator) wird 5 Minuten bei einer Temperatur von 140 - 150°C unter Stickstoff homogenisiert. Die verwendete BSH-Paste ist eine Mischung aus gleichen Teilen BSH und flüssigem Paraffin (Viskosität bei 20°C: 100 mPa.s (100 cP)).

### b) Probenherstellung

Die in der vorstehend beschriebenen Weise erhaltene Mischung wird granuliert und bei einer Preßtemperatur von 180°C zu 1 mm dicken Platten verpreßt (Preßzeit: 1 Minute). Die Platten werden bei Raumtemperatur mit Elektronenstrahlen der Dosis 200 bzw. 250 kGy vernetzt (Strahlquelle: 750 kV-Kaskadenelektronenbeschleuniger, 4 kW);

### c) Beurteilung der Vernetzung

Die Vernetzung der bestrahlten Platten wird durch Ermittlung des unlöslichen Anteils nach 12-stündiger Granulatextraktion (Granulat aus Würfeln der Kantenlänge 1 mm) in siedendem Xylol (prozentuale Vernetzung) und durch Messung der Wärmedehnung nach VDE 0472 d/...75, Entwurf 1, § 615, bestimmt. Hierbei wird die bei 200°C nach 15 Minuten Belastung einer Normprobe mit 20 N/cm$^2$ gemessene vorübergehende Dehnung (in %) zusammen mit der 5 Minuten nach Entlastung und bei gleicher Temperatur gemessenen bleibenden Dehnung (in %) angegeben (in Form von zwei durch einen Schrägstrich getrennten Zahlenwerten). Tabelle 1 enthält die für die Probekörper der Mischungen 1 bis 4, ermittelten Vernetzungswerte.

4

### Beispiel 2

Die in Tabelle 2 angegebene Menge Hochdruckpolyethylen PE (d = 0,918 g/cm$^3$, MFl$_{190/2}$ = 0,2) wird in einem Kneter bei einer Temperatur von 140°C plastifiziert. Nach Zugabe der in Tabelle 2 aufgeführten Mengen an BSH bzw. BSH-Paste nach Beispiel 1 sowie gegebenenfalls Stabilisator wird 5 Minuten bei einer Temperatur von 140°C unter Stickstoff homogenisiert und nach Zugabe eines Peroxids, d.h. 1.3-Bis(tert.butylperoxiiso-propyl)-benzol, nochmals 2 Minuten unter Stickstoff homogenisiert.

Die Herstellung der Probekörper und die Beurteilung der Vernetzung erfolgt analog Beispiel 1. Tabelle 2 enthält die für die Probekörper der Mischungen 5 bis 8 ermittelten Vernetzungswerte.

### Beispiel 3

Die in Tabelle 3 angegebene Menge eines Ethylen-Vinylacetat-Copolymerisats EVA mit 8,7 % VA-Anteil (d = 0,929 g/cm$^3$, MFl$_{190/2}$ = 0,1 bis 0,3) wird wie in Beispiel 2 mit BSH bzw. BSH-Paste nach Beispiel 1 und gegebenenfalls Stabilisator sowie Peroxid gemischt, zu Platten verpreßt und die Vernetzung geprüft. Tabelle 3 enthält die für die Probekörper der Mischungen 9 bis 12 ermittelten Vernetzungswerte.

### Beispiel 4

Die in Tabelle 4 angegebene Menge Hochdruckpolyethylen PE (d = 0,918 g/cm$^3$, MFl$_{190/2}$ = 0,2) wird in einem Kneter bei einer Temperatur von 140°C plastifiziert. Nach Zugabe der in Tabelle 4 aufgeführten Additive (BSH bzw. BSH-Paste sowie gegebenenfalls Stabilisator) wird 5 Minuten bei einer Temperatur von 140 bis 150°C unter Stickstoff homogenisiert. Die verwendete BSH-Paste ist eine Mischung aus gleichen Teilen BSH und Polyisobuten (Viskosität bei 20°C: 22000 cP).

Die Herstellung der Probekörper und die Beurteilung der Vernetzung erfolgt analog Beispiel 1. Tabelle 4 enthält die für die Probekörper der Mischungen 13 bis 16 ermittelten Vernetzungswerte.

Die Beispiele zeigen deutlich, daß das Dispersionsmittel die Vernetzung von Polyolefinen nicht beeinträchtigt.

**Tabelle 1**

| Nr. | Mischung | Vernetzung nach Bestrahlung mit | | | |
| --- | --- | --- | --- | --- | --- |
| | | 200 kGy | | 250 kGy | |
| | | Gelwert [%] | Wärmedehnung [%] | Gelwert [%] | Wärmedehnung [%] |
| 1 | 99,7 % PE + 0,3 % BSH | 76 | 116/8 | 79 | 72/4 |
| 2 | 99,4 % PE + 0,6 % BSH-Paste | 76 | 120/8 | 79 | 76/4 |
| 3 | 99,4 % PE + 0,3 % BSH + 0,3 % Stabilisator* | 71 | 148/12 | 75 | 96/8 |
| 4 | 99,1 % PE + 0,6 % BSH-Paste + 0,3 % Stabilisator* | 71 | 150/12 | 76 | 104/8 |

* polymeres 2.2.4-Trimethyl-1.2-dihydrochinolin

**Tabelle 2**

| Nr. | Mischung | | | Vernetzung | |
|---|---|---|---|---|---|
| | | | | Gelwert [%] | Wärmedehnung [%] |
| 5 | 98,5 % PE + 0,3 % BSH | + 1,2 % Peroxid** | | 88 | 40/4 |
| 6 | 98,2 % PE + 0,6 % BSH-Paste | + 1,2 % Peroxid** | | 87 | 40/4 |
| 7 | 98,2 % PE + 0,3 % BSH | + 0,3 % Stabilisator* | + 1,2 % Peroxid** | 84 | 48/8 |
| 8 | 97,9 % PE + 0,6 % BSH-Paste | + 0,3 % Stabilisator* | + 1,2 % Peroxid** | 84 | 48/8 |

* polymeres 2.2.4-Trimethyl-1.2-dihydrochinolin
** 1.3-Bis(tert.butylperoxiisopropyl)-benzol

**Tabelle 3**

| Nr. | Mischung | | Vernetzung | |
| --- | --- | --- | --- | --- |
| | | | Gelwert [%] | Wärmedehnung [%] |
| 9 | 98,5 % EVA + 0,3 % BSH | + 1,2 % Peroxid** | 94 | 20/4 |
| 10 | 98,2 % EVA + 0,6 % BSH-Paste | + 1,2 % Peroxid** | 93 | 24/4 |
| 11 | 98,2 % EVA + 0,3 % BSH | + 0,3 % Stabilisator + 1,2 % Peroxid** | 91 | 28/8 |
| 12 | 97,9 % EVA + 0,6 % BSH-Paste | + 0,3 % Stabilisator* + 1,2 % Peroxid** | 91 | 28/8 |

* polymeres 2.2.4-Trimethyl-1.2-dihydrochinolin
** 1.3-Bis(tert.butylperoxiisopropyl)-benzol

**0 071 849**

**Tabelle 4**

| Nr. | Mischung | Vernetzung nach Bestrahlung mit | | | |
| | | 200 kGy | | 200 kGy | |
| | | Gelwert [%] | Wärmedehnung [%] | Gelwert [%] | Wärmedehnung [%] |
|---|---|---|---|---|---|
| 13 | 99,7 % PE + 0,3 % BSH | 75 | 116/8 | 79 | 76/4 |
| 14 | 99,4 % PE + 0,6 % BSH-Paste | 76 | 120/8 | 78 | 80/4 |
| 15 | 99,4 % PE + 0,3 % BSH + 0,3 % Stabilisator* | 71 | 148/12 | 75 | 100/8 |
| 16 | 99,1 % PE + 0,6 % BSH-Paste + 0,3 % Stabilisator* | 72 | 150/12 | 76 | 104/8 |

* polymeres 2.2.4-Trimethyl-1.2-dihydrochinolin

**Patentansprüche**

1. Verfahren zur Stabilisierung organischer Polymerer gegen kupferkatalysierten oxidativen Abbau mittels N.N'-Bis-salicyloyl-hydrazin als Metalldesaktivator, dadurch gekennzeichnet, daß in das Polymere eine Paste eingearbeitet wird, die feinkristallines N.N'-Bis-salicyloyl-hydrazin in feiner Verteilung in einem flüssigen bis wachsartigen aliphatischen Kohlenwasserstoff geringer Flüchtigkeit enthält.

2. Verfahren nach Anspruch 1, dadurch gekennzeichnet, daß eine Paste verwendet wird, die N.N'-Bis-salicyloyl-hydrazin und den aliphatischen Kohlenwasserstoff im Verhältnis etwa von 1:2 bis 2:1 enthält.

3. Verfahren nach Anspruch 1 oder 2, dadurch gekennzeichnet, daß als aliphatischer Kohlenwasserstoff ein niedermolekulares Polyolefin, insbesondere Polyisobuten, oder Paraffin verwendet wird.

4. Verfahren nach einem der Ansprüche 1 bis 3, dadurch gekennzeichnet, daß ein viskoser Kohlenwasserstoff eingesetzt wird.

**Claims**

1. A process for stabilizing organic polymers against copper-catalysed oxidative degradation using N.N'-bis-salicyloyl-hydrazine as a metal deactivator, characterised in that a paste is worked into the polymer, which paste comprises finely-crystalline N.N'-bis-salicyloyl-hydrazine in fine distribution in a liquid to waxy aliphatic hydrocarbon of low volatility.

2. A process as claimed in Claim 1, characterised in that a paste is used which comprises the N.N'-bis-salicyloyl-hydrazine and the aliphatic hydrocarbon in the ratio of approximately 1:2 to 2:1.

3. A process as claimed in Claim 1 or Claim 2, characterised in that a low-molecular weight polyolefine, in particular polyisobutene, or paraffin is used as aliphatic hydrocarbon.

4. A process as claimed in one of Claims 1 to 3, characterised in that a viscous hydrocarbon is used.

**Revendications**

1. Procédé de stabilisation de polymères organiques vis-à-vis de la décomposition par oxydation catalysée par du cuivre, au moyen de N,N'-bis-salicyloyl-hydrazine servant de désactivateur de métaux, caractérisé en ce qu'il consiste à incorporer au polymère une pâte qui contient de la N,N'-bis-salicyloyl-hydrazine en cristaux fins, à l'état finement répartie, dans un hydrocarbure aliphatique liquide à cireux de faible volatilité.

2. Procédé suivant la revendication 1, caractérisé en ce qu'il consiste à utiliser une pâte qui contient la N,N'-bis-salicyloyl-hydrazine et l'hydrocarbure aliphatique dans le rapport de 1:2 à 2:1 environ.

3. Procédé suivant la revendication 1 ou 2, caractérisé en ce qu'il consiste à utiliser comme hydrocarbure aliphatique une polyoléfine à bas poids moléculaire notamment du polyisobutène ou une paraffine.

4. Procédé suivant l'une des revendications 1 à 3, caractérisé en ce qu'il consiste à mettre en oeuvre un hydrocarbure visqueux.